# EUROPEAN PATENT APPLICATION

(11) **EP 1 300 958 A2**
(43) Date of publication of application: **09.04.2003**
(21) Application number: 02022463.0
(22) Date of filing: 04.10.2002
(51) Int. Cl.: H04B 1/28

(54) **Cellular communications channelizer**

(30) Priority: 04.10.2001 US 971750
(71) Applicant: TRW INC., Redondo Beach, CA 90278 (US)
(72) Inventor: Harnden, Robert R., Redondo Beach, CA 90278 (US); Namoos, Waleed M., Redondo Beach, CA 90278 (US)
(74) Representative: Schmidt, Steffen J., Dipl.-Ing.

(57) **Abstract**

A channelizer (224) for recovering communication channels is connected to a resampling filter (204) having an input connection (308) on which data arrives at an input data rate, and an output connection (310) on which data exits at an output data rate. The channelizer (224) further comprises an n-point discrete Fourier transform (DFT) circuit (208) coupled to the output data rate output (226) and a plurality of individual recovered channel outputs (210) coupled to the DFT circuit (208). Resampling circuitry (302, 306) in the resampling filter (204) converts the input data rate to the output data rate in a manner commensurate with a preselected communication channel spacing, communication channel output sample rate, and number of communication channels. The DFT circuit (208) may use (n-m) point overlap and the channelizer (224) may further include a polyphase filter (206) implementing n/m oversampling coupled between the resampling filter (204) and the DFT circuit (208).

## Description

### BACKGROUND OF THE INVENTION

Many types of wireless communication services have emerged in a relatively short period of time. Service subscribers, in turn, have quickly discovered the significant benefits in convenience and accessibility stemming from wireless communication. As a result, wireless communications services have advanced quickly into a position of popularity and profitability.

Generally, a wireless communication subscriber transmits information to a base station in a "channel". A channel represents a portion of electromagnetic spectrum having a predetermined bandwidth in which signal information resides. As one example, the European Global System Mobile (GSM) defines 200 KHz wide channels with 200 KHz spacing centered at 897.5 MHz and spanning 35 MHz of bandwidth.

In certain wireless applications, a single receiver processes multiple individual channels in order to recover the signal information present in each channel. In the past, such receivers included a separate processing chain called a sub-band tuner for each channel. The sub-band tuner generally included, for example, a local IF oscillator and mixer (for converting a transmitted frequency to a first working frequency), a bandpass filter (for isolating a channel), a second IF oscillator and mixer (for downconverting the isolated channel for further processing), and an Analog to Digital converter (for digitizing the downconverted isolated channel).

By processing channels individually, the receiver relaxed certain design requirements for the processing chain. For example, off the shelf low bandwidth A/D converters with 60dB dynamic range were capable of digitizing the relatively narrow bandwidth downconverted isolated channel. However, a receiver that included multiple sub-band tuners incurred significant cost increases arising from the duplication of sub-band tuner components for each channel.

As a result, designers proposed an alternative receiver implementation that used a single bulk processing chain to recover signal information from multiple channels. The bulk processing chain included an IF local oscillator and mixer (for converting a transmitted frequency to a first working frequency), a bandpass filter (for isolating multiple channels in a wide slice of bandwidth), a second IF local oscillator and mixer (for further downconverting the wide slice of bandwidth for additional processing), and a single A/D converter (for digitizing the slice of spectrum spanning the multiple channels).

However, in order to recover channels from the slice of spectrum, additional processing is required. In particular, it is further necessary to isolate individual channels using a process sometimes referred to as channelization. In the past, however, there were no suitable channelizers available for cellular communication systems. As a result, the proposed bulk processing chain could not be implemented, and the more expensive and complicated individual sub-band tuner designs were adopted.

A need has long existed in the industry for a cellular communications channelizer that addresses the problems noted above and others previously experienced.

### BRIEF SUMMARY OF THE INVENTION

A preferred embodiment of the present invention provides, in a cellular communications system in which terminals transmit information in cellular communication channels assigned from a predetermined spectrum, a cellular communications receiver. The cellular communications receiver includes an antenna for receiving a signal spanning multiple cellular communication channels, a downconverter coupled to the antenna for shifting the signal to an intermediate frequency, and a channelizer coupled to the downconverter for recovering the individual cellular communication channels and outputting the individual cellular communication channels on individual recovered channel outputs. The cellular communication channels may be GSM or Interim Standard cellular communication channels, as examples.

The channelizer may be, for example, an n-point discrete Fourier transform (DFT) circuit, with optional m-point overlap. The variables m and n are integers with m<n. In addition, the receiver may include a polyphase filter coupled to the DFT circuit, and a recovered channel output selection circuit coupled to the individual recovered channel outputs. Where the DFT circuit provides n outputs, the recovered channel output selection circuit may select a subset of recovered channel signals from the n outputs.

Another preferred embodiment of the present invention provides a channelizer for recovering communication channels. The channelizer comprises a resampling filter having an input connection on which data arrives at an input data rate, and an output connection on which data exits at an output data rate. The channelizer further comprises a discrete Fourier transform (DFT) circuit coupled to the output data rate output and a plurality of individual recovered channel outputs coupled to the DFT circuit.

Resampling circuitry in the resampling filter converts the input data rate to the output data rate in a manner commensurate with a preselected communication channel spacing, communication channel output sample rate, and number of communication channels. The input data rate may be, for example, a front end analog to digital converter sample rate. The channel spacing may be, as examples, GSM or Interim Standard channel spacing. The channel output sample rate may be, for example, an integer multiple of a symbol rate of a communication signal (e.g., two times the symbol rate of a GSM communication signal).

The DFT circuit may be, for example, an n-point DFT circuit with m-point overlap, where m and n are integers with m<n. The channelizer may further include a polyphase filter coupled between the resampling filter and the DFT circuit. The polyphase filter may implement n/m oversampling. Additionally, a recovered channel output selection circuit may be coupled to the individual recovered channel outputs for passing a subset of recovered channel signals onto subsequent processing.

### BRIEF DESCRIPTION OF THE DRAWINGS

Figure 1 illustrates a cellular communications receiver.

Figure 2 shows a signal processing chain including a DFT channelizer.

Figure 3 shows a block diagram of a resampling filter.

Figure 4 shows the frequency response of a polyphase filter.

Figure 5 shows a block diagram of a polyphase filter processing block.

Figure 6 depicts an n/m oversampling polyphase filter constructed using the polyphase filter processing blocks.

Figure 7 illustrates the frequency response of a raised cosine detection filter.

Figure 8 shows a method for recovering individual communication channels from a received signal.

### DETAILED DESCRIPTION OF THE INVENTION

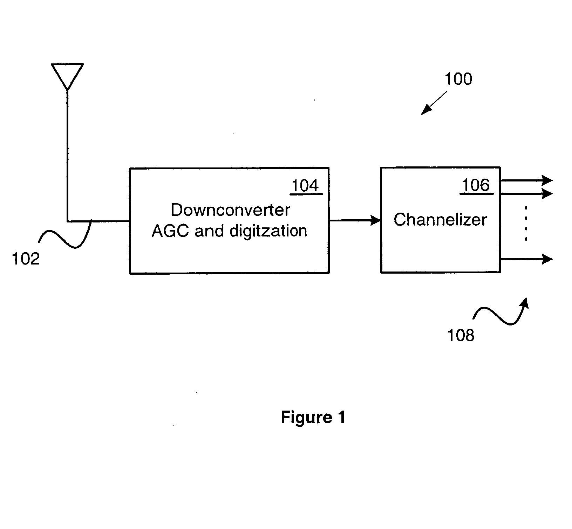

Turning now to Figure 1, that figure illustrates a cellular communications channel receiver 100. The receiver may be, for example, a cellular communication base station. The receiver 100 includes an antenna 102, a downconverter 104, and a channelizer 106 (described in more detail below). The channelizer 106 provides the recovered channel outputs 108.

The receiver 100 operates in a cellular communications system in which terminals transmit information in cellular communication channels assigned from a predetermined spectrum. For example, the terminals may transmit information according to the European Global System Mobile (GSM) specification, that provides 200 KHz wide channels with 200 KHz spacing centered at 897.5 MHz and spanning 35 MHz of bandwidth. The terminals may also transmit according to other types of standards, however, including the North American Interim Standard 54 or 136 standards.

The downconverter 104, in general, shifts a received signal to an intermediate frequency for further processing by the channelizer 106. The downconverter 104 may also be accompanied by additional functionality such as filtering, automatic gain control (e.g., between 0 and 36 dB), and analog to digital (A/D) conversion. The additional functionality may include, as examples, the equalization techniques described in TRW Docket No. 12-1214, titled "Intermediate Frequency Signal Amplitude Equalizer for Multichannel Applications", filed concurrently herewith, as serial no. , and TRW Docket No. 12-1215, titled "Amplitude Cancellation Topology for Multichannel Applications", filed concurrently herewith, as serial no. .

The downconversion process may begin, for example, with a 15 MHz wide received signal on a 897.5 MHz center subsequently 14-bit sampled at 65 Msps. The downconversion process preferably provides an intermediate frequency of one-quarter of the A/D conversion sample rate, Fs, although three-quarters and one and one-quarter are also suitable. Furthermore, in GSM systems, the intermediate frequency may be preferably offset by approximately 100 KHz.

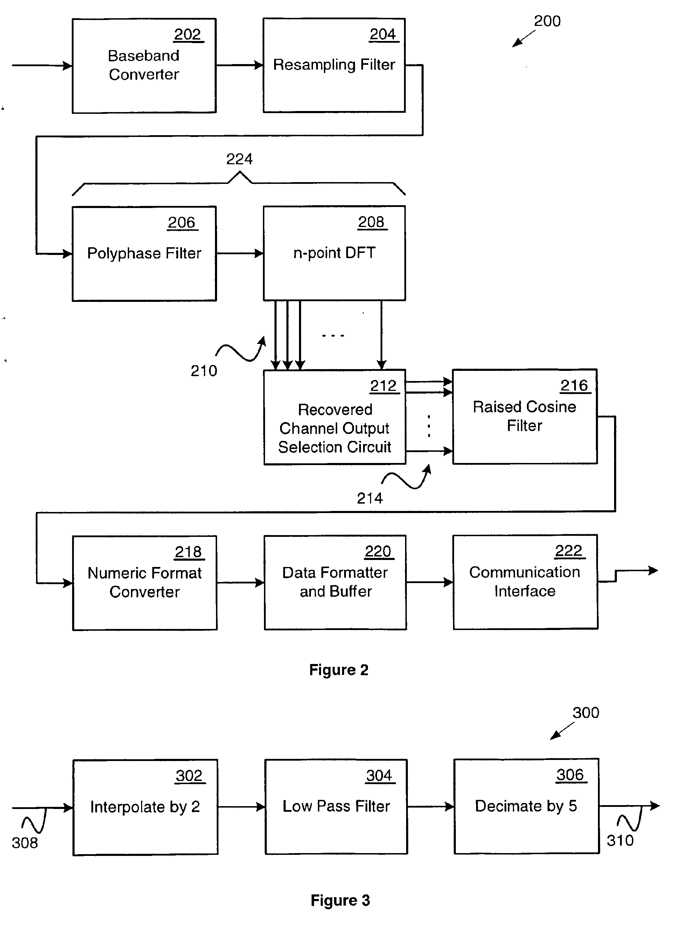

Turning next to Figure 2, that figure illustrates a signal processing chain 200. The processing chain includes a baseband converter 202, a resampling filter 204, and a polyphase filter 206. The processing chain further includes an n-point DFT circuit 208 providing the recovered channel outputs 210. A recovered channel output selection circuit 212 couples to the recovered channel outputs 210 and provides the selected channel outputs 214. In one implementation of the n-point DFT circuit 208, n = 130, and the 130-point DFT is performed as a set of 13-point DFTs followed by a set of 5-point DFTs followed by a set of 2-point DFTs. Performing the DFT using such a prime number factorization generally yields an implementation that requires less resources (e.g., gates, registers, memory, and the like).

Additionally, the processing chain 200 includes a raised cosine filter 216 coupled to a numeric format converter 214. A data formatter and buffer 220 and a communication interface 222 follow. In the processing chain 200 set forth above, the channelizer 224 may be regarded as the polyphase filter 206 followed by the n-point DFT circuit 208. The additional support circuitry 202-204 and 212-222 may be added as desired, or as required by a particular application.

The baseband converter 202 provides digital mixers, oscillators, and other support circuitry that convert incoming digital samples of a received signal to complex baseband. Thus, the resultant Inphase (I) and Quadrature (Q) samples represent signal content centered around approximately DC. The received signal is preferably a wide slice (e.g., 15-35 MHz) of spectrum spanning multiple communication channels.

For example, in a GSM cellular communication system, the received signal may be 15 MHz wide, thereby spanning 75 200 KHz wide channels, with 200 KHz spacing. In certain GSM implementations, only every third frequency is used. As a result, a 15 MHz portion of spectrum may in some instances include 25 active channels, rather than 75.

The samples input to the baseband converter 202 are preferably 20 bit real samples. As an example, the baseband converter 202 may then downconvert by Fs/4 using a 35 tap low pass filter with approximately 0.0045 dB peak to peak pass band ripple and 91.8 dB stop band attenuation. The samples output from the baseband converter are 22 bit I and 22 bit Q samples at 65 Msps.

As noted above, a front end A/D converter provides received signal samples at a predetermined A/D converter sample rate. However, the n-point DFT 208 may be designed to accommodate a different sample rate, given the communication channel spacing, communication channel output sample rate, and number of communication channels that the DFT circuit 208 recovers simultaneously. In one implementation the front end A/D converter sample rate is 65 Msps, and the preferred DFT circuit 208 sample rate is 26 Msps. As a result, the invention provides the resampling filter 204 to adapt the front end processing to the DFT processing. The front end processing and the DFT processing may thereby be designed with different goals in mind, and one need not be unduly limited by the other.

Turning to Figure 3, that figure illustrates one embodiment of a resampling filter 300. The resampling filter 300 includes an interpolator 302, a low pass filter 304, and a decimator 306. An input data rate input 308 and an output data rate output 310 are also shown. The interpolator 302 and decimator 306 function as resampling circuitry to adapt an input data rate to an output data rate.

In other implementations, additional interpolation or decimation may be used, and the interpolations and decimations may be by different amounts in order to provide a suitable output data rate given an input data rate. As one example, the interpolator 302 may provide an interpolation by 2, and the decimator 306 may provide a decimation by 5. As a result, an input sample rate of 65 Msps changes to an output sample rate of (65 * 2) / 5 = 26 Msps. The low pass filter may be a 16 tap finite impulse response filter with approximately 0.021 dB peak to peak pass band ripple and 96.23 dB stop band attenuation. The samples output from the resampling filter 204 are 22 bit I and 22 bit Q samples at 26 Msps.

The output of the resampling filter 300 may be served by a dual port SRAM that receives samples from the resampling filter 300 and that provides samples to the polyphase filter 206. For the implementation described above, the dual port SRAM may be 24,992 bits in size.

Referring again to Figure 2, the output of the resampling filter 204 feeds the polyphase filter 206. In general, a polyphase filter provides a set of filter structures in parallel, each of which may be selected at a different time to provide the different phases of the filter on incoming data. In the implementation shown in Figure 2, the DFT circuit 208 provides n outputs, each of which is a narrowband channelized communication signal with the same bandwidth but that originated a different center frequency. The polyphase filter 206 provides the desired frequency response for each of the n communication channels. The DFT circuit 208 then replicates the frequency response across all the center frequencies at the same time.

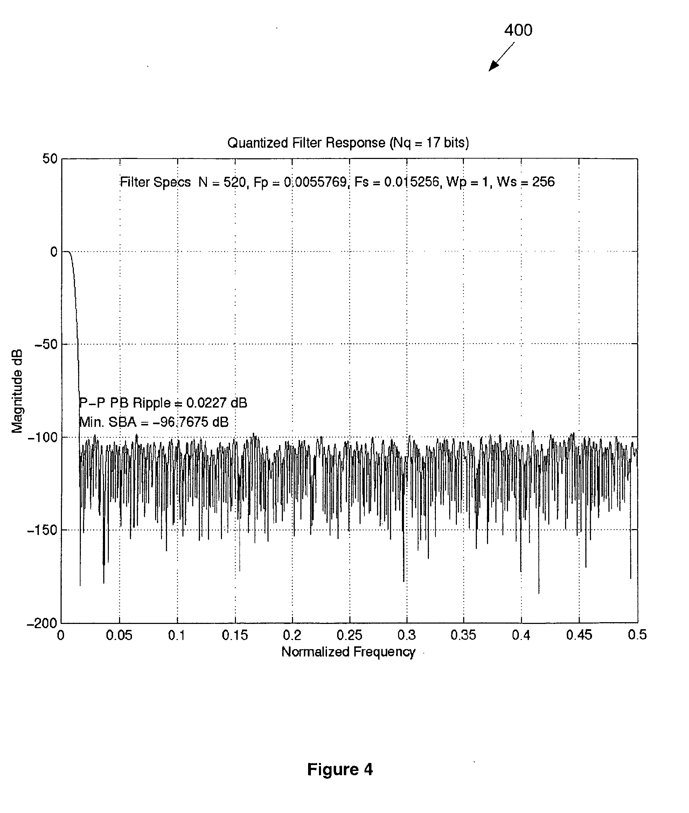

Figure 4 presents a suitable frequency response 400 for the polyphase filter 206. The frequency response 400 provides peak to peak pass band ripple of approximately 0.023 dB and a minimum stop band attenuation of approximately 96.7 dB using a 520 tap digital low pass filter. The samples output from the polyphase filter 206 are preferably 22 bit I and 22 bit Q samples.

The polyphase filter 206 preferably implements an oversampling ratio of n/m, where n and m are integers with m<n. The variable n is the number of points in the DFT circuit computation, and m is the number of new samples brought into each DFT computation. As an example, with n=130, m may be 48. In other words, the DFT circuit 208 computes a new DFT each time 48 new received signal samples arrive.

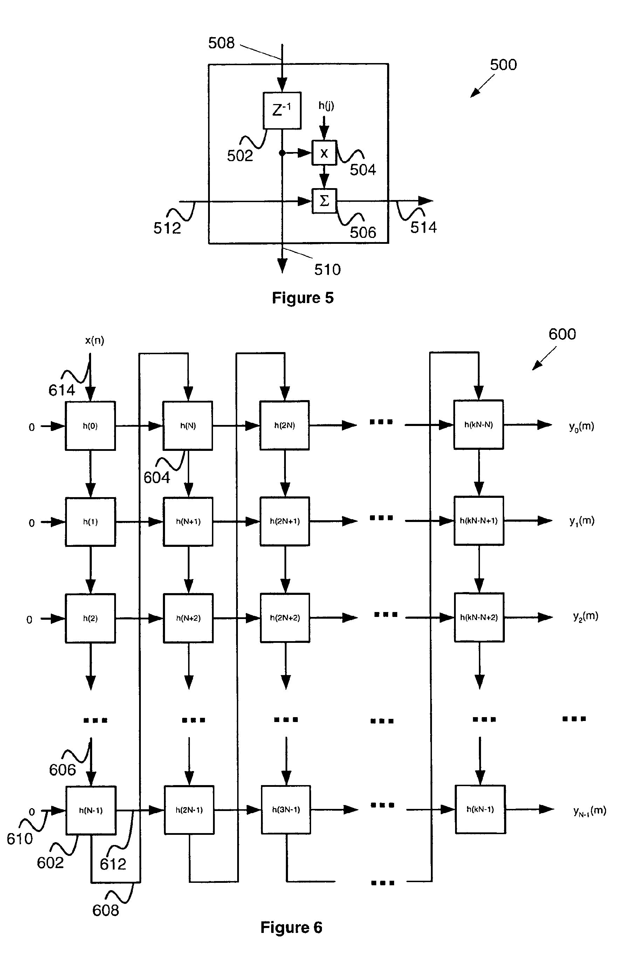

Turning to Figure 5, that figure illustrates a block diagram of a polyphase filter processing block 500. The processing block 500 includes a delay element (e.g., a memory) 502, a multiplier 504, and a summer 506. Each processing block 500 also stores a filter coefficient h(j). Signal samples enter the processing block on the sample input 508 and exit on the sample output 510. A partial sum input 512 connects to the summer 506, which, in turn provides the partial sum output 514.

Each signal sample stored in the delay element 502 is multiplied against the filter coefficient h(j), and added to the sample value on the partial sum input 512. The resultant sum is output on the partial sum output 514. When a new value is shifted into the processing block 500 on the sample input 508, the old sample value stored in the delay element 502 propagates out on the sample output 510.

Figure 6 depicts an oversampling polyphase filter 600 constructed using the polyphase filter processing blocks 500 (e.g., the processing blocks 602 and 604 shown labeled in Figure 6). Each processing block includes a sample input (e.g., the sample input 606), a sample output (e.g., the sample output 608), a partial sum input (e.g., the partial sum input 610), and a partial sum output (e.g., the partial sum output 612). Processing blocks in the first column are presented with a constant value (e.g., zero) on their partial sum inputs. Figure 6 also shows a filter input 614 and n filter outputs y(m).

The polyphase filter 600 is arranged as n rows by k columns (i.e., a matrix of k*n processing blocks). Each processing block in the polyphase filter 600 stores or is otherwise associated with a filter coefficient h(j). The k*n filter coefficients h(j) implement the frequency response 400 illustrated in Figure 4.

In operation, two steps are repeated. First, m samples shift into the polyphase filter 600 (the oldest m samples are discarded) on the filter input 614. Second, the n outputs y₀(m) through yₙ₋₁(m) are computed. The polyphase filter 600 thus provides an oversampling ratio of n/m with a window length of k*n and a presum ratio of k:1.

The polyphase filter 206 may be served by two single port SRAMs. The polyphase filter 206 writes to one SRAM while the DFT circuit 208 reads from the other. In the implementation described above, each SRAM may be 5720 bits (i.e., large enough to hold 130 22-bit I samples and 22-bit Q samples).

Referring again to Figure 2, the DFT circuit 208 operates on the polyphase filtered signal provided by the polyphase filter 206. In particular, the DFT circuit 208 implements an n-point DFT to provide n narrowband channelized communication signals individually on the recovered channel outputs 210. Thus, for example, where n=130, the DFT circuit 208 provides 130 individual outputs.

The DFT circuit 208 is tailored to a particular cellular communication system, communication channel spacing, communication channel output sample rate, and number of communication channels. For example, in a GSM communication system, the communication channel spacing is 200 KHz, the communication channel output sample rate may be a multiple of a symbol rate of a GSM communication signal, and the number of communication channels, N, may be 75 (assuming processing of 15 MHz of spectrum).

As one example, when the communication channel spacing is 200 KHz, the communication channel output sample rate (e.g., 1625/3 Ksps) is twice the communication signal symbol rate (1625/6 Ksps), and N=75, the sample rate (Fs_in) commensurate with DFT circuit 208 operation is constrained by:
N > 74
Fs_in/N = 200 KHz, and
Fs_in/M = 1625/3 Ksps

These constraints are met by N/M = 130/48, yielding a Fs_in of 26 MHz. As noted above, the resampling filter 204 adapts the front end sample rate to be commensurate with the desired DFT circuit 208 sample rate. The DFT circuit 208 preferably outputs 28 bit I and 28 bit Q output samples, for example, at 1625/3 Ksps.

As noted above, the 130 point DFT may be performed first as a set of 13-point DFTs, followed by a set of 5-point DFTs, then a set of 2-point DFTs. For the implementation noted above, a 6760 bit single port SRAM may be provided to store the results of the 13-point DFT.

Next, the recovered channel output selection circuit 212 determines which recovered channel signals to pass on for further processing. To that end, the selection circuit 212 may operate in response to a multibit control signal specifying the recovered channel signals to retain on the selected channel outputs 214. The remaining recovered channel signals are discarded. The control signal may, for example, control circuitry that selectively stores in memory or discards outputs of the DFT circuit 208, thereby selecting or retaining a subset of recovered channel signals. The output samples remain 28 bit I and 28 bit Q output samples at 1625/3 Ksps.

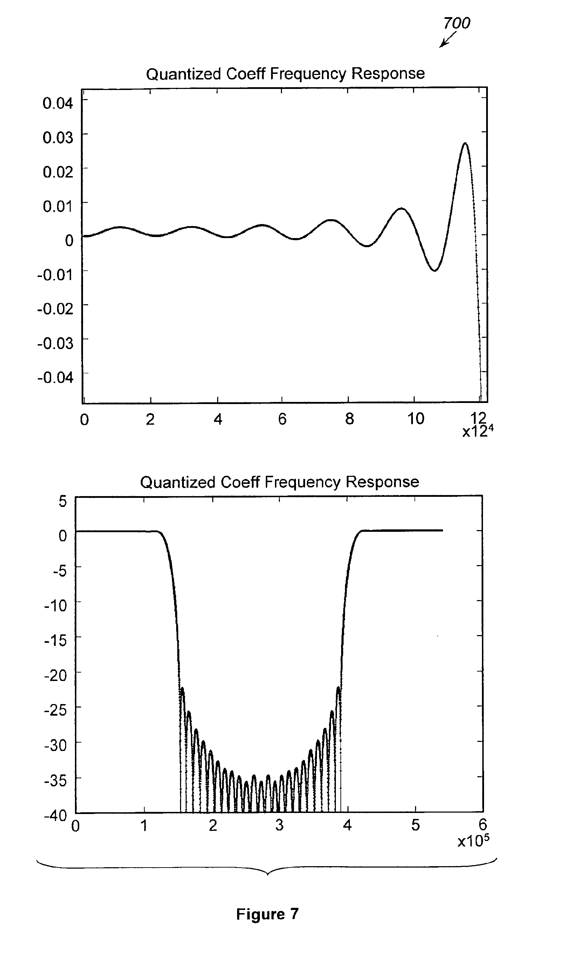

The raised cosine filter 216 filters the subset of recovered channel signals that are retained. To that end, there may be multiple raised cosine filters 216 (e.g., one for each recovered channel signal). The raised cosine filter 216 provides, using a finite impulse response filter, a frequency response matched to the transmitter frequency response. An exemplary raised cosine filter frequency response 700 is shown in Figure 7. The raised cosine filter 216 may be implemented, for example, using a 49 tap finite impulse response filter with approximately 0.04 dB peak to peak pass band ripple. The output samples remain 28 bit I and 28 bit Q output samples at 1625/3 Ksps.

The optional numeric format converter 218 provides circuitry that converts the numeric representation used by previous processing elements to a different numeric format (if any) desired for subsequent processing. In one implementation, the numeric format converter 218 is preferably implemented using discrete logic that converts the fixed point representation used in previous processing steps to a floating point representation with a mantissa and an exponent between 2⁰ and 2¹⁵. The output samples are preferably 12 bit I and 12 bit Q samples with 4 bits of gain information, at 1625/3 Ksps.

The data formatter and buffer 220 provides circuitry to arrange the samples, after numeric formatting, into a desired output format, and to buffer the samples for transmission. For example, the data formatter and buffer 220 may prepare the samples for transmission according to a predetermined communication standard. The output samples remain 12 bit I and 12 bit Q samples with 4 bits of gain information, at 1625/3 Ksps.

The communication interface 222 provides a transport mechanism for transmitting the output samples to subsequent processing. As examples, the communication interface 222 may be a serial, parallel, or network interface.

In general, the processing chain 200 may be implemented in digital form in one or more ASICs. Thus, for example, where multiple recovered channel outputs 210 or selected channel outputs 214 are shown, those outputs may, in fact, be blocks of memory rather than discrete signal connections. As another example, the output selection circuit 212 may pass or block certain recovered channel signals by writing to or clearing memory areas, rather than providing outputs on discrete signal connections.

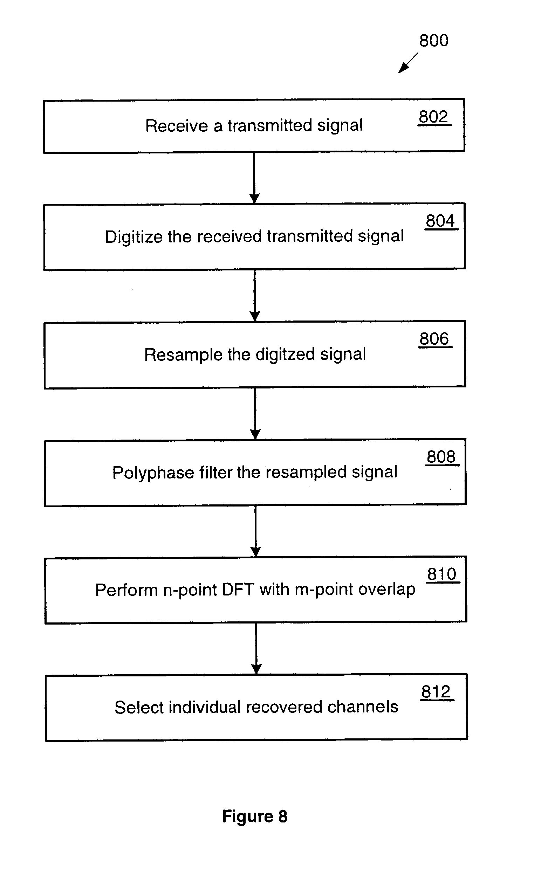

Turning next to Figure 8, that figure illustrates a method for recovering individual communication channels from a received signal. First a transmitted signal is received (802). The transmitted signal spans multiple communication channels in bandwidth. Subsequently, the processing chain 200 digitizes (804) the transmitted signal to form a digitized input signal. Next, the processing chain 200 resamples (806) the digitized received signal from an input data rate to an output data rate commensurate with a preselected communication channel spacing, communication channel output sample rate, and a number of communication channels. After polyphase filtering (808), the processing chain 200 then performs (810) an n-point DFT on the polyphase filtered resampled signal to recover individual communication channels. The processing chain may then select (812) a subset of individual recovered channels to preserve for subsequent processing.

The invention thereby provides a method and apparatus for recovering many communication channels simultaneously without the need to repeat, for example, individual sub-band tuners. Thus, the invention provides significant cost and complexity benefits that grow with the number of communications channels recovered. The invention further allows a channelizer to adapt, using a resampling filter, to a wide range of input sample rates.

While the invention has been described with reference to one or more preferred embodiments, those skilled in the art will understand that changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. In a cellular communications system in which terminals transmit information in cellular communication channels assigned from a predetermined spectrum, a cellular communications receiver comprising:
an antenna for receiving a signal spanning multiple cellular communication channels;
a downconverter coupled to the antenna for shifting the signal to an intermediate frequency; and
a channelizer coupled to the downconverter for recovering the individual cellular communication channels and outputting the individual cellular communication channels on individual recovered channel outputs.

2. A channelizer for recovering communication channels, the channelizer comprising:
a resampling filter comprising an input data rate input coupled to resampling circuitry, and an output data rate output coupled to the resampling circuitry;
a discrete Fourier transform (DFT) circuit coupled to the output data rate output; and
a plurality of individual recovered channel outputs coupled to the DFT circuit,
wherein the second data rate is commensurate with a preselected communication channel spacing, communication channel output sample rate, and number of communication channels.

3. The channelizer of claim 2, wherein the input data rate is a front end analog to digital converter sample rate.

4. The channelizer of claim 2, wherein the preselected channel spacing is at least one of GSM and Interim Standard channel spacing.

5. The channelizer of claim 2, wherein the channel output sample rate is an integer multiple of a symbol rate of a communication signal.

6. The channelizer of claim 5, wherein the integer multiple is at least two.

7. The channelizer of claim 2, further comprising a polyphase filter coupled between the resampling filter and the DFT circuit.

8. The channelizer of claim 2, wherein the DFT circuit is an n-point DFT circuit with (n-m) point overlap,
where m and n are integers with m<n.

9. The channelizer of claim 2, wherein the DFT circuit is an n-point DFT circuit with (n-m) point overlap,
where m and n are integers with m<n, and further comprising an n/m oversampling polyphase filter coupled between the resampling filter and the DFT circuit.

10. The channelizer of claim 2, further comprising a recovered channel output selection circuit coupled to the individual recovered channel outputs for passing a subset of recovered channel signals onto subsequent processing.

11. The channelizer of claim 9, wherein n=130 and n=48, and the output data rate is 26 Msps.
